# FASCICULE DE BREVET EUROPEEN

(11) **EP 0 544 582 B1**
(45) Date de publication et mention de la délivrance du brevet: **22.02.1995**
(21) Numéro de dépôt: 92403159.4
(22) Date de dépôt: 24.11.1992
(51) Int. Cl.: B60J 5/06

(54) **Dispositif de guidage d'un ouvrant coulissant telle une porte coulissante, en particulier pour véhicule automobile**
Führungsvorrichtung einer Schiebeöffnung, zum Beispiel einer Schiebetür, insbesondere für ein Kraftfahrzeug
Guiding device for a sliding opening such as a sliding door, particularly for a motor vehicle

(30) Priorité: 27.11.1991 FR 9114670
(43) Date de publication de la demande: 02.06.1993
(73) Titulaire: AUTOMOBILES PEUGEOT, 75116 Paris (FR); AUTOMOBILES CITROEN, 92200 Neuilly-sur-Seine (FR)
(72) Inventeur: Dubernard, Yves, F-78790 St Martin Des Champs (FR)
(74) Mandataire: Durand, Yves Armand Louis

(56) Documents cités:
- EP-A- 0 102 053
- GB-A- 2 080 743

## Description

La présente invention concerne un dispositif de guidage d'un élément ouvrant coulissant, telle une porte coulissante, de véhicule automobile.

Les systèmes actuellement utilisés pour réaliser le guidage de portes coulissant le long d'un panneau, par exemple latéral arrière, d'un véhicule automobile, tel que celui décrit dans le document EP-A-0 102 053, sont constitués principalement par une glissière longitudinale coopérant avec des galets supportés par la porte, et fixée de manière proéminente sur le flanc du véhicule. Il en résulte d'une part, que ces systèmes sont particulièrement exposés aux chocs et présentent donc une certaine fragilité, et que d'autre part, ils font apparaître une rupture de continuité de la surface du flanc du véhicule, particulièrement inesthétique.

La présente invention résout ces inconvénients et propose un dispositif de guidage d'un ouvrant coulissant telle une porte coulissante en particulier pour véhicule automobile, de conception simple, de fonctionnement fiable, et étant particulièrement discret car harmonieusement intégré à la surface de la carrosserie de manière à préserver la netteté du style du véhicule.

A cet effet la présente invention a pour objet un dispositif de guidage d'un ouvrant coulissant, telle une porte coulissante, de véhicule automobile, du genre comprenant une glissière ou analogue fixée sur une rainure horizontale appartenant à la caisse de véhicule à proximité du bord inférieur d'une surface vitrée ou analogue reliée à la caisse, ladite glissière coopérant avec des moyens supportés par l'élément ouvrant et mobiles le long de la glissière lors du déplacement de l'élément ouvrant entre une position d'ouverture et une position de fermeture (connu par exemple par GB-A-2 080 743), ce dispositif étant caractérisé en ce que la rainure est conformée et dimensionnée de telle façon que la surface vitrée, prenant appui sur un joint d'étanchéité fixé sur la caisse au voisinage du bord supérieur de la rainure, s'étende au-delà dudit joint en direction du bord inférieur de la rainure jusqu'à recouvrir environ la moitié supérieure de la rainure et de la glissière.

Suivant une caractéristique particulière de l'invention, la surface vitrée précitée est reliée à la caisse par l'intermédiaire de charnières ou analogues d'axe sensiblement vertical situées du côté de l'élément ouvrant en position de fermeture.

Suivant une autre caractéristique particulière de l'invention le moyen supporté par l'élément ouvrant est constitué par des galets aptes à rouler dans la glissière de guidage.

Suivant une autre caractéristique, l'élément ouvrant est une porte latérale arrière de véhicule automobile, alors que la surface vitrée appartient au panneau latéral arrière (ou custode) d'une carrosserie de véhicule automobile.

L'invention a également pour objet un véhicule automobile équipé d'un dispositif de guidage d'un ouvrant coulissant comportant les caractéristiques décrites ci-dessus prises seules ou en combinaisons.

Mais d'autres avantages et caractéristiques de l'invention apparaîtront mieux à partir de la description détaillée qui suit et se réfère aux dessins annexés donnés uniquement à titre d'exemple et dans lesquels:
La figure 1 est une vue partielle en perspective, illustrant un véhicule automobile équipé d'un dispositif de guidage de porte coulissante conforme à l'invention.
La figure 2 est un élément de détail de la figure 4, illustrant dans une vue en perspective et en coupe, une partie du panneau latéral arrière de la carrosserie d'une automobile.
La figure 3 est une vue en coupe suivant la ligne III-III de la figure 4, illustrant cette même partie du véhicule, lorsque la porte coulissante se situe au voisinage de sa position d'ouverture maximale.
La figure 4 est une vue partielle en perspective du même véhicule, la porte coulissante étant entrouverte.

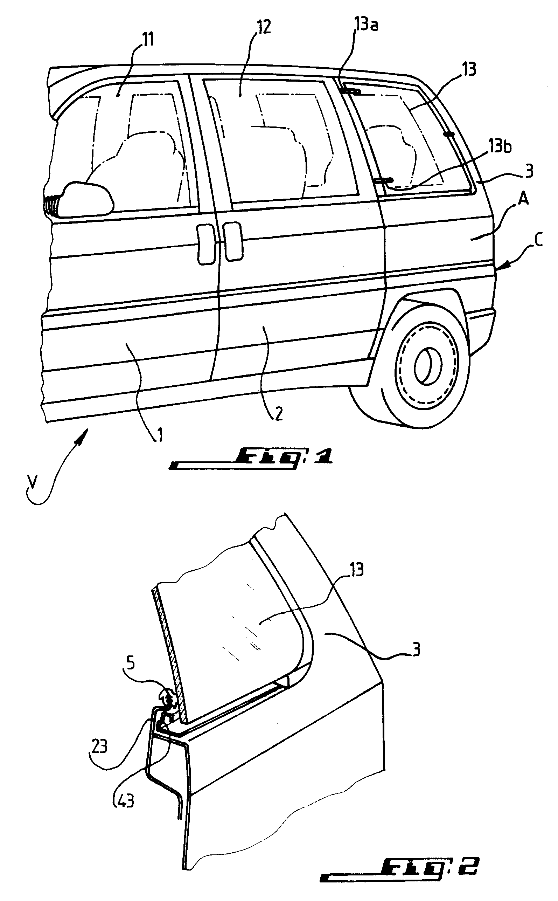

Sur la figure 1, on voit un véhicule automobile V muni de deux portes avant 1 articulées et de deux portes arrière 2 coulissant parallèlement à la direction longitudinale du véhicule V, respectivement le long de deux panneaux latéraux arrière 3 (ou custode) de la carrosserie C du véhicule V. Chacune des portes précitées 1, 2 comporte une surface vitrée 11, 12, des vitres de custode 13 quant à elles, étant supportées de manière articulée sur la caisse C, par l'intermédiaire de deux charnières 13a, 13b situées du côté avant de la vitre 13 et permettant le pivotement de ladite vitre 13 autour d'un axe sensiblement vertical, entre une position fermée et une position entrebaillée.

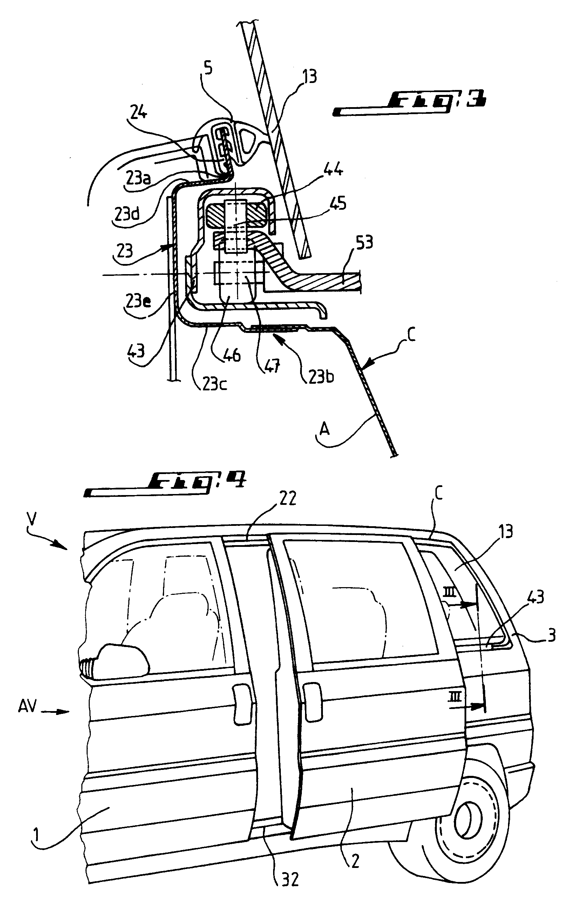

Comme ceci est mieux visible sur la figure 4, chaque porte arrière 2 coulisse le long de trois glissières 22, 32, 43, respectivement deux glissières 22, 32 situées aux parties supérieure et inférieure de l'ouverture de porte arrière, et une glissière arrière centrale 43 longeant le bord inférieur de la vitre 13 de custode.

En se reportant aux figures 2 et 3, on voit que le dispositif de l'invention destiné à être mis en place au voisinage de la vitre de custode 13, comporte la glissière centrale 43 formée de deux parties respectivement supérieure et inférieure s'étendant longitudinalement et parallèlement à la surface de la vitre 13 sensiblement sur toute sa longueur, et fixée sur une surface de la caisse C emboutie de manière à former une rainure 23 délimitée par une paroi de fond 23e et deux parois respectivement supérieure 23d et inférieure 23c. Cette paroi inférieure 23c est reliée à l'aile arrière A du véhicule V, lesdites parois supérieure et inférieure étant sensiblement perpendiculaires à la paroi de fond, et la forme de ladite rainure 23 épousant sensiblement celle de la glissière 43. Cette glissière 43 coopère, par l'intermédiaire de sa surface interne, avec des galets 44, 46 montés rotatifs sur des axes 45, 47 supportés par une partie de support 53 solidaire de la porte 2 de mainère à guider cette même porte lors de son déplacement le long du panneau latéral arrière 3. La vitre 13 (montée pivotante autour d'un axe sensiblement vertical, comme précédemment mentionné) prend appui, par sa face située du côte de l'habitacle, contre un joint d'étanchéité 5 fixé sur un rebord 24 de la caisse C situé le long du bord supérieur 23a de la rainure 23, et s'étend vers le bas (du véhicule V) en direction du bord inférieur 23b de la rainure 23, jusqu'au voisinage d'une partie horizontale du support 53 solidaire de la porte, en recouvrant la moitié supérieure de la rainure 23 et de la glissière 43.

En fonctionnement, lors du passage de la porte coulissante 2 de sa position de fermeture où elle dégage la vitre 13 à sa position d'ouverture où elle recouvre partiellement celle-ci, la porte coulisse en même temps le long des glissières avant supérieure 22, inférieure 32 et arrière centrale 43, grâce aux galets 44, 46 roulant dans ces glissières, en ne laissant apparaître à la surface du flanc du véhicule V aucune partie proéminente.

On a donc réalisé grâce à l'invention, un dispositif de guidage d'un élément ouvrant coulissant, rendant la présence de la glissière, ou rail de guidage, extrêmement discrète en l'intégrant harmonieusement à la ligne inférieure des surfaces vitrées du véhicule, ce système étant de plus particulièrement fiable de par sa position située en dehors des zones les plus vulnérables du flanc du véhicule.

Bien entendu, l'invention n'est pas limitée au mode de réalisation décrit et illustré qui n'a été donné qu'à titre d'exemple.

## Revendications

1. Dispositif de guidage d'un ouvrant coulissant (2) telle une porte coulissante de véhicule automobile, du genre comprenant une glissière (43) ou analogue fixée sur une rainure horizontale (23) appartenant à la caisse (C) du véhicule à proximité du bord inférieur d'une surface vitrée (13) ou analogue reliée à la caisse (C), ladite glissière (43) coopérant avec des moyens (44, 46) supportés par l'élément ouvrant (2) et mobiles le long de la glissière (43) lors du déplacement de l'élément ouvrant entre une position d'ouverture et une position de fermeture,
caractérisé en ce que la rainure (23) est conformée et dimensionnée de telle façon que la surface vitrée (13), prenant appui sur un joint d'étanchéité (5) fixé sur la caisse (C) au voisinage du bord supérieur (23a) de la rainure (23), s'étende au-delà dudit joint (5) en direction du bord inférieur de la rainure (23) jusqu'à recouvrir environ la moitié supérieure de la rainure (23) et de la glissière (43).

2. Dispositif selon la revendication 1, caractérisé en ce que la surface vitrée (13) est reliée à la caisse (C) par l'intermédiaire de charnières (13a, 13b) ou analogues d'axe sensiblement vertical situées du côté de l'élément ouvrant (2) en position de fermeture.

3. Dispositif selon l'une quelconque des revendications 1 ou 2, caractérisé en ce que les moyens (44, 46) précités supportés par l'élément ouvrant (2) sont constitués par des galets (44, 46) aptes à rouler dans la glissière de guidage (43).

4. Dispositif selon l'une quelconque des revendications précédentes, caractérisé en ce que l'élément ouvrant est une porte latérale arrière (2) de véhicule automobile (V), alors que la surface vitrée (13) appartient au panneau latéral arrière (3) (ou custode) d'une carrosserie (C) de véhicule automobile (V).

5. Véhicule automobile équipé d'un dispositif de guidage d'un ouvrant coulissant selon l'une quelconque des revendications précédentes.

## Claims

1. Device for guiding a sliding leaf (2) such as a sliding door of an automotive vehicle, of the kind comprising a slideway (43) or the like fastened onto a horizontal groove (23) belonging to the body (C) of the vehicle close to the bottom edge of a glazed surface (13) or the like connected to the body (C), the said slideway (43) co-operating with means (44, 46) supported by the opening element (2) and movable along the slideway (43) upon the displacement of the opening element between an opening position and a closing position,
characterized in that the groove (23) is shaped and dimensioned in such a manner that the glazed surface (13) bearing upon a sealing joint (5) fastened to the body (C) in the vicinity of the top edge (23a) of the groove (23), extends beyond the said joint (5) towards the bottom edge of the groove (23) until covering about the upper half of the groove (23) and of the slideway (43).

2. Device according to claim 1, characterized in that the glazed surface (13) is connected to the body (C) through the medium of hinges (13a, 13b) or the like with a substantially vertical axis, located towards the opening element (2) in the closing position.

3. Device according to any one of claims 1 or 2, characterized in that the aforesaid means (44, 46) supported by the opening element (2) are constituted by rollers (44, 46) adapted to roll in the guide slideway (43).

4. Device according to any one of the foregoing claims, characterized in that the opening element is a rear side door (2) of the automotive vehicle (V) whereas the glazed surface (13) belongs to the rear side panel (3) (or rear side wall) of a car body (C) of an automotive vehicle (V).

5. Automotive vehicle fitted with a device for guiding a sliding leaf according to any one of the foregoing claims.

## Patentansprüche

1. Vorrichtung zur Führung eines sich öffnenden Schiebeteiles (2), wie einer Schiebetür eines Kraftfahrzeuges, derjenigen Gattung, mit einer an einer zu dem Wagenkasten (C) des Fahrzeugs in der Nähe des unteren Randes einer mit dem Wagenkasten (C) verbundenen verglasten Fläche (13) oder dergleichen gehörenden waagerechten Nut (23) befestigten Gleitschiene (43) oder dergleichen, wobei die besagte Gleitschiene (43) mit von dem sich öffnenden Element (2) getragenden und entlang der Schiene (43) während der Verschiebung des sich öffnenden Elementes zwischen einer Öffnungsstellung und einer Schließstellung bewegbaren Mitteln (44, 46) zusammenwirkt, dadurch gekennzeichnet, dass die Nut (23) derart gestaltet und bemessen ist, dass die sich an einer an dem Wagenkasten (C) im Bereich des oberen Randes (23a) der Nut (23) befestigten Dichtungsleiste (5) abstützende verglaste Fläche (13) sich über die besagte Dichtungsleiste (5) hinaus in Richtung auf den unteren Rand der Nut (23) erstreckt, bis sie ungefähr die obere Hälfte der Nut (23) und der Gleitschiene (43) abdeckt.

2. Vorrichtung nach Anspruch 1, dadurch gekennzeichnet, dass die verglaste Fläche (13) mit dem Wagenkasten (C) über auf der sich dem öffnenden Element (2) in der Schließstellung zugewandten Seite gelegene Scharniere (13a, 13b) oder dergleichen mit etwa senkrechter Achse verbunden ist.

3. Vorrichtung nach irgendeinem der Ansprüche 1 oder 2, dadurch gekennzeichnet, dass die vorgenannten von dem sich öffnenden Element (2) getragenen Mittel (44, 46) durch Rollen (44, 46), die fähig sind, in der Führungsgleitschiene (43) zu rollen, gebildet werden.

4. Vorrichtung nach irgendeinem der vorangehenden Ansprüche , dadurch gekennzeichnet, dass das sich öffnende Element eine hintere Seitentür (2) des Kraftfahrzeuges (V), ist während die verglaste Fläche (13) zu der hinteren Seitenplatte (3) (bzw. über dem Hinterrad liegenden Karosserieteil) einer Karosserie (C) des Kraftfahrzeuges (V) gehört.

5. Mit einer Vorrichtung zur Führung eines sich öffnenden Schiebeteiles gemäss irgendeinem der vorangehenden Ansprüche ausgerüstetes Kraftfahrzeug.
